Europäisches Patentamt

European Patent Office

Office européen des brevets

(11) Publication number: **0 359 823**
**A1**

## EUROPEAN PATENT APPLICATION
### published in accordance with Art. 158(3) EPC

(21) Application number: 88907396.1

(22) Date of filing: 25.08.88

(86) International application number:
PCT/JP88/00847

(87) International publication number:
WO 89/02121 (09.03.89 89/06)

(51) Int. Cl.5: **G06F 9/26**

(30) Priority: 25.08.87 JP 211184/87

(43) Date of publication of application:
28.03.90 Bulletin 90/13

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **MURAOKA, Yutaka Fanuc Dai-3**
**Vira-karamatsu**
**3527-1, Shibokusa, Oshino-mura**
**Minamitsuru-gun Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) METHOD AND APPARATUS FOR CONTROLLING THE EXECUTION OF MICROPROGRAM.

(57) A method and an apparatus for controlling the execution of a microprogram are provided wherein a microinstruction is decoded to select the internal program counter and stacks or to select an external input, in order to address the program memory. When the microinstruction from the microprogram memory is not a branch instruction, the fact that this instruction is directly produced to an external circuit is utilized to set an execution sequence control flag in a portion of the microinstruction, and a step is changed in a portion in the single program.

Fig. 1

-1-

DESCRIPTION

MICROPROGRAM EXECUTION CONTROL METHOD, AND

APPARATUS THEREFOR

Technical Field

This invention relates to a method and apparatus for controlling execution of a microprogram in a bit slice-type processor utilized in an image processing apparatus or the like.

Background Art

In order to achieve the processing speed and processing capacity required by a processor for ordinary image processing, an computing system which uses a microprogram sequencer is desirable. In such case, making common use of a microprogram routine, i.e., subroutining, is an important technique for the purpose of reducing control storage capacity.

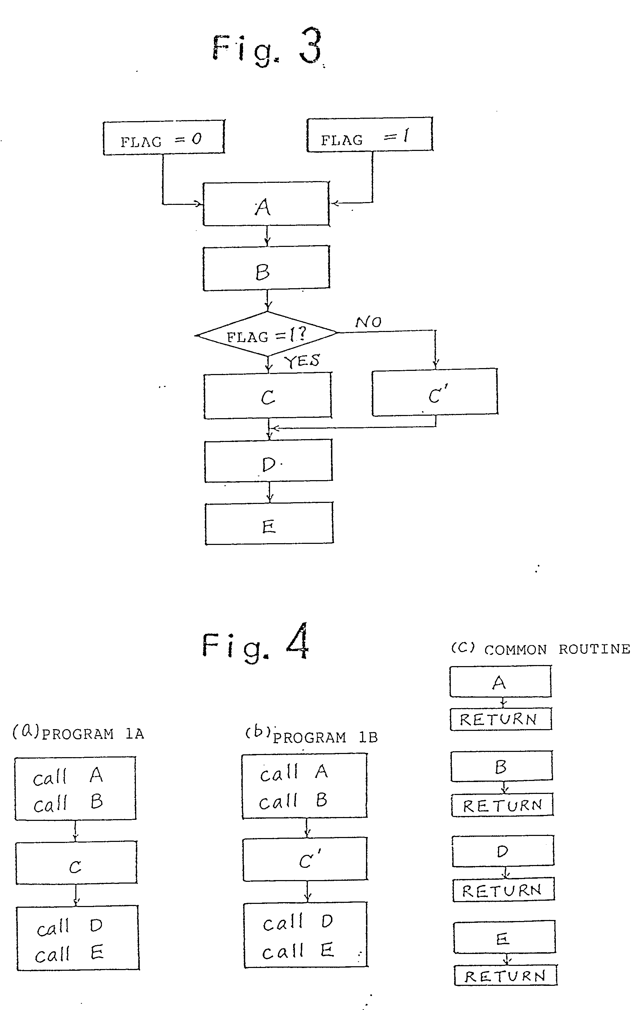

As one example of this, programs 1A and 2A shown in Figs. 4(a) and (b) successively call and execute predetermined subroutines from a common routine shown in Fig. 4(c). Since only the intermediate routines in the two programs 1A, 2A differ from each other, the capacity of the microprogram memory can be reduced. This makes it possible to readily diversify the contents of processing in image processing or the like.

In this conventional method of controlling the execution of a microprogram by such subroutining, use is made of a stack, which is an internal register of an address sequencer for calling subroutines. However,

-2-

with a sequencer that does not possess a stack register or one that has a small number of stages, it is required that an address undergoing execution be preserved beforehand in a separate storage area. A problem that results in a decline in flexibility when designing the microprogram.

Disclosure of the Invention

The present invention has been devised in order to solve the foregoing problem and its object is to provide a microprogram execution control method, and an apparatus therefor, in which two programs that are similar to each other can be stored in advance as a common program without using subroutines.

According to the present invention, there is provided a microprogram execution control method for decoding a micro instruction, selecting an internal program counter and a stacker or external input, and designating an address of a program memory, characterized by setting an execution sequence control flag when a preceding microprogram does not contain a branch instruction, and deciding an address of a microprogram, which is to be executed next, in accordance with the flag.

The microprogram execution control method of the present invention, in one example thereof, can be realized in a microprogram execution control apparatus, which has a microprogram memory controlled by a microprogram sequencer, for executing flow control which conforms to a specific condition input. In such case, the microprogram execution control apparatus, which is provided with latch means for latching the condition input for a prescribed period of time, flag forming means for forming a control flag to the sequencer by part of the latched condition input, and control means for writing the flag in the microprogram sequencer as part of the condition input, exhibits a high degree of flexibility in terms of its ability to efficiently create a processing program such as for pattern conversion of image data.

Brief Description of the Drawings

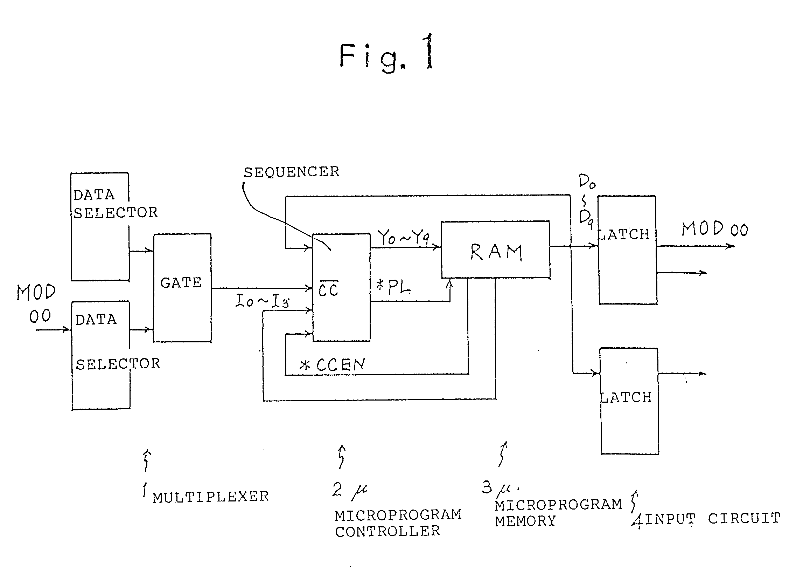

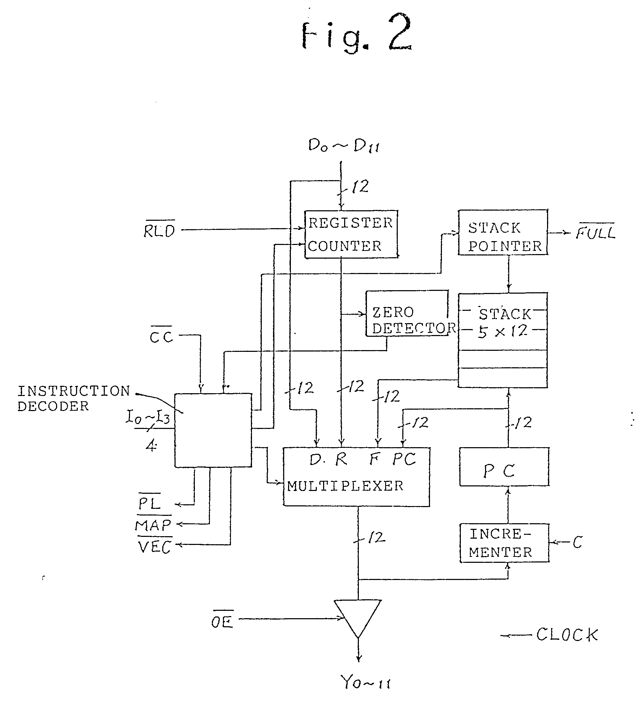

Fig. 1 is a block diagram illustrating an embodiment of the present invention, Fig. 2 is a block diagram illustrating an example of the construction of a sequencer, Fig. 3 is a flowchart illustrating the procedure of program execution control according to the present invention, and Figs. 4(a) - (c) are views illustrating an example of a conventional method of constructing subroutines.

Best Mode for Carrying Out the Invention

An embodiment of the present invention will now be described in detail with reference to the drawings.

Fig. 1 is a view for describing the arrangement of functional blocks illustrating an embodiment of the present invention. The present system comprises a multiplexer 1, a microprogram controller 2, a microprogram memory 3, and a signal input unit 4 for signals applied to external equipment. A sequencer 21 constituting the program controller 2 employs, e.g., an AMD 2901 or 2910 shown in Fig. 2. The program memory 3 is constituted by a plurality of RAM's. In response to instructions inputted to the sequencer 21 as instructions $I_0 - I_3$, addresses of program steps executed every machine cycle proceed as is in accordance with an internal counter, or a conditional branch can be made to an address designated by an instruction. An address sequence function for executing the abovementioned instructions every machine cycle enables the number of instruction bits to be set at will depending upon the hardware configuration of the external equipment to be controlled. Therefore, by way of example, data corresponding to the instruction bits can be latched, as in an input unit used in image buffer control, so that it is possible to execute an arithmetic program based on a complicated sequence such as in image processing.

The characterizing feature of the present invention is that part of the instruction data to the external equipment latched for a predetermined period of time in the signal input unit 4 is selectively fed back by the multiplexer 1 as a condition input for controlling the program, and is used as a flag for program execution control. In other words, a modal signal MOD00 latched by the signal input unit 4 is selected by a data selector 11 of the multiplexer 1 and

-5-

suplied to a jump condition (*CC) signal input terminal of the sequencer 21.

Fig. 3 illustrates a procedure for distinguishing between and executing the two programs 1A and 2A, shown in Figs. 4(a), (b), in a case where B is selected as the address of the program memory in accordance with the set value of the abovementioned flag. In this case, the sequencer 21 refers to the jump condition and automatically selects either a task C or C' following execution of task B, and then executes a task D. Thus, part of the steps in a single program, which includes two different tasks, can be changed by a flag without calling a subroutine. Accordingly, microprogram execution control of the present invention enhances operability in terms of microprogram creation and in terms of setting the microprogram in a RAM as hardware. Superior results are obtained in comparison with the conventional case where execution is controlled solely by subroutines.

Though an embodiment of the invention has been described, the invention is not limited thereto but can be modified in various ways without departing from the scope of the claims.

Industrial Applicability

The method and apparatus for controlling execution of a microprogram according to the invention enhance flexibility in controlling the flow of a system using a microprogram sequencer.

CLAIMS:

1. A microprogram execution control method for decoding a micro in truction, selecting an internal program counter and a stacker or external input, and designating an address of a program memory, comprising:

a step of setting an execution sequence control flag in a micro instruction when a preceding microprogram does not contain a branch instruction; and

deciding an address of a microprogram, which is to be executed next, in accordance with the flag.

2. A microprogram execution control apparatus, which has a microprogram memory controlled by a microprogram sequencer, for executing flow control which conforms to a specific condition input, comprising:

latch means for latching said condition input for a prescribed period of time;

flag forming means for forming a control flag to said sequencer by part of the latched condition input; and

control means for writing the flag in said microprogram sequencer as part of the condition input.

# Fig. 1

SEQUENCER

DATA SELECTOR

MOD 00

DATA SELECTOR

GATE

$I_0 \sim I_3$

$\overline{CC}$

*CCEN

$Y_0 \sim Y_4$

*PL

RAM

$D_0$
$\downarrow$
$D_9$

LATCH

MOD 00

LATCH

1 MULTIPLEXER

2 μ. MICROPROGRAM CONTROLLER

3 μ. MICROPROGRAM MEMORY

4 INPUT CIRCUIT

EP 0 359 823 A1

# Fig. 2

# Fig. 3

```
  FLAG = 0                    FLAG = 1

            ┌───────────┐
            │     A     │
            └───────────┘
                  │
            ┌───────────┐
            │     B     │
            └───────────┘
                  │
              ╱─────────╲          NO
             ⟨ FLAG = 1? ⟩─────────────┐
              ╲─────────╱
                  │ YES
            ┌───────────┐      ┌───────────┐
            │     C     │      │    C'     │
            └───────────┘      └───────────┘
                  │                  │
            ┌───────────┐
            │     D     │
            └───────────┘
                  │
            ┌───────────┐
            │     E     │
            └───────────┘
```

# Fig. 4

(C) COMMON ROUTINE

```
┌───────────┐
│     A     │
├───────────┤
│  RETURN   │
└───────────┘

┌───────────┐
│     B     │
├───────────┤
│  RETURN   │
└───────────┘

┌───────────┐
│     D     │
├───────────┤
│  RETURN   │
└───────────┘

┌───────────┐
│     E     │
├───────────┤
│  RETURN   │
└───────────┘
```

(a) PROGRAM 1A

```
┌───────────┐
│  call  A  │
│  call  B  │
└───────────┘
      │
┌───────────┐
│     C     │
└───────────┘
      │
┌───────────┐
│  call  D  │
│  call  E  │
└───────────┘
```

(b) PROGRAM 1B

```
┌───────────┐
│  call  A  │
│  call  B  │
└───────────┘
      │
┌───────────┐
│    C'     │
└───────────┘
      │
┌───────────┐
│  call  D  │
│  call  E  │
└───────────┘
```

INTERNATIONAL SEARCH REPORT

International Application No PCT/JP88/00847

## I. CLASSIFICATION OF SUBJECT MATTER (if several classification symbols apply, indicate all) 6

According to International Patent Classification (IPC) or to both National Classification and IPC

Int.Cl⁴     G06F9/26

## II. FIELDS SEARCHED

### Minimum Documentation Searched 7

| Classification System | Classification Symbols |
|---|---|
| IPC | G06F9/26 |

### Documentation Searched other than Minimum Documentation to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 53-44132 (NEC Corporation) 20 April 1978 (20. 04. 78) (Family: none) | 1-2 |
| X | JP, A, 53-50634 (Honeywell Information Systems Inc.) 9 May 1978 (09. 05. 78) & US 4,124,893, DE 2,746,505, FR 2,368,090 | 1-2 |
| X | JP, A, 55-91028 (Fujitsu Ltd.) 10 July 1980 (10. 07. 80) (Family: none) | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 7, 1988 (07. 11. 88) | November 28, 1988 (28. 11. 88) |

| International Searching Authority | Signature of Authorized Officer |
|---|---|
| Japanese Patent Office | |

Form PCT/ISA/210 (second sheet) (January 1985)